# EUROPEAN PATENT SPECIFICATION

(11) **EP 1 007 979 B1**
(45) Date of publication and mention of the grant of the patent: **18.12.2002**
(21) Application number: 98940379.5
(22) Date of filing: 25.08.1998
(51) Int. Cl.: G01P 21/02, G01P 3/489

(54) **A METHOD FOR CALIBRATING A SPEED OR DISTANCE MEASURING DEVICE**
VERFAHREN ZUR EICHUNG EINER GESCHWINDIGKEITS- ODER ENTFERNUNGSMESSEINRICHTUNG
PROCEDE D'ETALONNAGE D'UN DISPOSITIF DE MESURE D'UNE VITESSE OU D'UNE DISTANCE

(30) Priority: 29.08.1997 GB 9718379
(43) Date of publication of application: 14.06.2000
(73) Proprietor: Stoneridge Electronics Limited, Edinburgh, EH1 2ET (GB)
(72) Inventor: LISLE, Michael, Edgar, Thomas, Fife KY16 9DA (GB)
(74) Representative: Carpmaels & Ransford
(86) International application number: GB9802551
(87) International publication number: WO99012043

(56) References cited:
- EP-A- 0 059 433
- CH-A- 657 916
- FR-A- 2 739 927
- US-A- 3 436 656
- US-A- 3 714 642
- PATENT ABSTRACTS OF JAPAN vol. 8, no. 42 (P-256) [1479], 23 February 1984 & JP 58 193468 A (MATSUSHITA DENKI SANGYO K.K.), 11 November 1983

## Description

This invention relates to a method for calibrating a speed and/or distance measuring device fitted to a vehicle.

Virtually all road vehicles require a means of indicating speed. Traditionally, such means have used a rotating output derived from a gearbox output shaft. The rotational motion is then transferred to the speed indicator (speedometer or tachograph) by a rotating cable. With cars, the relationship between speed/distance and rotation of this cable is usually fixed for any given model range. However, commercial vehicles generally have a wide range of gearbox, axle and tyre options. This results in a large variation in the ratio between gearbox output and wheel rotation even within a model range. It is therefore necessary for the speed indicator to allow for this variation. It is also necessary for the precise ratio to be determined for any given vehicle. In the case of a tachograph, it is a legal requirement for this ratio to be determined at regular intervals. In the case of vehicles with mechanical drive to the speedometer/tachograph, the value which is determined is the number of turns of the gearbox output for each kilometre travelled by the vehicle. This value or calibration factor is often known as the 'W-factor' of the vehicle.

Although rotating cables are physically simple, they present a number of difficulties. In commercial vehicles in particular, they have largely been replaced with speed/distance senders which produce electrical pulses as the vehicle moves. The calibration factor (W-factor) for the vehicle is then the number of electrical pulses per kilometre travelled by the vehicle. Again this must be determined for individual vehicles. Typically, the W-factor for a commercial vehicle is in the range (say) 2500 to 25,000, though other values are possible.

To determine the W-factor of a vehicle, the vehicle must be moved over a known distance and the number of pulses from the speed/distance sender over that distance is counted. An arrangement for achieving this is disclosed in Japanese patent application number JP6834982, published as JP58193468.

Considering the pulses from the sender, when carrying out a calibration test the beginning of the known distance will generally occur somewhere between one pulse edge and the next. When simply counting pulses from the sender there is therefore an uncertainty of up to one pulse at the beginning of the test. This situation is then repeated at the end of the known distance. This gives rise to an overall measurement uncertainty of up to plus or minus one pulse.

Where the known distance is large, the number of pulses counted over that distance is similarly large. The uncertainty of plus or minus one pulse may then not be significant. For example, with a W-factor of 2500 and a test distance of 1 kilometre the measurement uncertainty is 0.04%. However, with a test distance of 20 metres the measurement uncertainty becomes 2%.

Two ways of providing a 'known distance' are commonly used to determine the W-factor of a commercial vehicle - either a rolling road which can simulate an arbitrary distance (but which itself needs calibration) or a measured length track. A rolling road is simple to use, but is costly and not easy to calibrate. The only calibration needed for a track is to measure its length. A vehicle calibrated along a measured track can then be used to calibrate a rolling road (provided that calibration of that vehicle is accurate enough).

Although to achieve accuracy in a simple way, a long track is to be preferred, it is unusual to have space available for a long track and significant time would be required to drive the length of such a track. There is therefore a need to use a shorter track and to improve the method of determining the number of pulses from the speed/distance sender over the length of that track. It is now common for tachograph fitting stations to use a 20 metre track.

Council Regulation (EEC) 3821/85 requires that a vehicle fitted with a tachograph is calibrated with an accuracy of ± 1%. To achieve this, the calibration system requires an accuracy somewhat better, say ± 0.3%. Thus, where a rolling road is used, the rolling road must have an accuracy of ± 0.3%. To calibrate the rolling road, its calibration system must have yet better accuracy, say ± 0.05%. Thus, if a vehicle is to be used to calibrate a rolling road, it must first have been calibrated to ± 0.05%.

The critical factors in calibrating a vehicle over a measured distance are:
1. Measurement of the length of the track;
2. Relating the pulses from the speed/distance sender to the precise beginning and end of the measured distance; and
3. Determining the precise number of pulses from the sender whilst traversing the measured distance, including the partial pulses at beginning and end of the track.

Whilst the length of the track can be measured by standard means, the points at which the vehicle passes the beginning and end of the track must be identified within millimetres.

According to the invention, there is provided a method of calibrating a speed or distance measuring device for a vehicle which is fitted with a sender pulse generator for generating pulses related to the distance travelled by the vehicle, said sender pulses having a frequency related to the speed of, or distance travelled by the vehicle, the method comprising the steps of:
providing a track having a predetermined length between starting and finishing markers;
causing the vehicle to travel between the starting and finishing markers and counting the number of full sender pulses produced by the sender pulse generator;
determining any fraction of a pulse length which occurs between the starting marker and the first full sender pulse and;
determining any fraction of a pulse length which occurs between the last full sender pulse and the finishing marker; and
determining the number of full sender pulses and fractions of sender pulses occurring when the vehicle travels between said markers, and
using the information so determined, with the known track length, to determine a calibration factor for the speed/distance measuring device on the vehicle.

Each fractional pulse length can be determined by measuring the time interval between the marker and the nearest pulse edge and comparing this with the time for a full pulse. For example, if the rising edge of the pulse is used as a reference, the time interval A can be measured between the starting marker and the first rising edge. The interval C can also be measured between the last rising edge and the finishing marker. If these times are expressed as fractions of the respective time intervals B and D measured between consecutive rising edges at the start and finish of the track (i.e. as a fraction of a pulse length), these fractions then represent fractions of a pulse which can be added to the count of the full pulses.

By relating A to B at the start, and by relating C to D at the finish, an allowance can be made for any change in vehicle speed between the beginning and end of the track. However, the vehicle preferably travels with constant velocity over the track, when B would be equal to D.

The invention may be used, for example, with a relatively short track of 20 metres.

The duration of the vehicle on the track, between the markers, may be signalled by causing a switch to operate when a reference point on the vehicle passes the relevant marker. This can be used to provide a timed interval between the starting marker and the finishing marker, during which interval full (or integral) pulses are counted. The switch may be mechanical, for example, it may be an antenna or wand shaped member which strikes the edge of a V-block in passing. It could also be operated by pressure when one of the vehicle tyres passes over a pressure mat, or it could be an optical switch on the vehicle which is operated when a part of the vehicle is detected at the marker.

The invention may be used in conjunction with a tachograph which indicates vehicle speed and records information relating to the journey including speed and the distance travelled by the vehicle. (Vehicles which need to be fitted with tachographs usually have only the tachograph as a means of indicating speed. However, the invention is not limited to the use of tachographs as speed indicating devices.) Generally, the tachograph will need to be calibrated for a specific vehicle due to the gearboxes, rear axles and tyres used. By way of example, assuming that 8000 pulses are generated by the sender for each 1 kilometre of distance, then the odometer reading must be increased by 1/8000km for each pulse. In practice an odometer will require pulses representing (say) 0.1 or 0.01km distance increments. The number of pulses from the speed/distance sender is counted until they represent a distance greater than the increment of the odometer. The odometer is then incremented and the odometer incremental distance is subtracted from the speed/distance pulse counter. This enables the odometer display to show the correct distance travelled for the number of pulses generated for that gearbox/axle/tyre combination. The tachograph is provided with a means for setting the appropriate calibration factor, for example, switches, electronic memory and the like. The microprocessor is programmed so as to respond to this setting so that the odometer is incremented accurately for the distance travelled by the vehicle.

Whilst the sender generates pulses which are primarily counted for distance measurement, the rate at which the pulses are generated by the speed/distance sender on the gearbox is proportional to vehicle speed. The microprocessor can also be programmed to respond to this pulse rate and the calibration factor so as to provide an output signal which is supplied, to an electronic display, for indicating vehicle speed.

As the techniques for recording speed and distance data, in a tachograph, are known to those skilled in the art, they will not be described in detail. However, it will be understood that the invention can be applied to such an arrangement in order to provide an accurate means of calibrating the odometer and the speed indicating device (electronic display) on the tachograph.

One way of measuring the fraction of pulse which occur in the intervals (a) after passing the starting marker and before the first leading edge, and (b) between the last full pulse and the finishing marker, is to count faster pulses in these intervals. These are generated, by a second pulse generator, at much faster rate than the sender pulses generated by the vehicle. For example, oscillator or suitably divided clock pulses, having a fixed frequency, can be used to increment a counter. (The fast pulses will be called "clock pulses" for convenience, although these may be generated by any suitable means and may or may not be divided.) The clock pulse count can be stored at the leading edge of each sender pulse and also when the vehicle passes the starting and finish markers (e.g. when a switch is operated by an antenna striking a V-block at the marker position). Preferably, a microprocessor in the tachograph is programmed to determine the sender pulse count, which represents the number of full pulses generated by the sender (or first) pulse generator whilst the vehicle is travelling between the markers. It is also programmed to determine the respective sender pulse lengths at the starting and finishing markers, e.g. by subtracting the clock pulse count at the leading edge from the clock pulse count at the next leading edge (i.e. of the sender pulse which occurs whilst passing the marker). If the vehicle travels at substantially constant speed over, e.g. a comparatively short track, it may be reasonable to assume that the pulse lengths at both markers are the same. In the latter case only one full sender pulse length needs to be determined. Any fractions of sender pulses occurring after passing the starting marker, and immediately before the finishing marker can also be calculated from the clock pulse counts. This can be achieved by the microprocessor, which is also programmed to add the fractions of full (sender) pulses to the full (sender) pulse count and then to equate this with the known distance between the markers to calculate a conversion or calibration factor. This calibration factor can be manually set in the tachograph, or stored by the microprocessor.

Broadly speaking, it is possible to program the on-board microprocessor so that the number of full and partial sender pulses are determined in the "window" between switch signals representing the positions of the starting and finishing markers. The distance between the markers is stored as data to be accessed by the microprocessor. This provides relevant data which can be processed to determine a calibration factor. The microprocessor can store this factor for converting sender pulses into distance and/or speed information, which is recorded by the tachograph when the vehicle is used commercially.

Alternatively, external signal processing circuitry may be provided to which is input pulses from the speed/distance sender and pulses from the switches which indicate the instants at which the vehicle passes the starting and finishing markers. This external circuitry may include pulse counting means for counting the integral pulses between the starting and finishing markers; timing and or (fast) pulse counting means for timing the intervals between the starting marker and the first rising edge and between the last pulse and the finishing marker, and computational circuitry for calculating precisely the number of integral sender pulses and fractions of sender pulses for providing a calibration factor. This may be in the form of a readout which enables the tachograph calibration setting to be adjusted accordingly.

In accordance with claim 4, instead of measuring fractions of pulse length adjacent the markers, it is possible to measure fractions of distances.

The fractions of track length can simply be subtracted or added to the known track length when determining the distance covered by the vehicle during the interval of "x" full or integral pulses transmitted by (e.g.) the gearbox sender. The number "x" will vary according to the vehicle and pulse generator, and any variation in track length. It may be the number of pulses which fit into the distance between the markers, or the number which envelope this distance. Usually, a fraction of a sender pulse will occur after passing the starting marker, and another fraction will occur just before passing the finishing marker. This will become clearer when considering the exemplary embodiment described below.

The fractions of track length could be used to determine corresponding fractions of sender pulses, which are then combined with the count of full sender pulses to provide a value that is equated with the known distance between the markers to determine a calibration factor for the speed/distance measuring device on the vehicle.

The method could be put into effect by using a bar code and a bar code reader to determine the fractional track lengths. For example, the vehicle can be fitted with a bar code extending in its normal direction of travel (this could be permanently fitted to the vehicle). A bar code reader is then provided at each marker position so as to scan the bar code as the vehicle passes by. At the starting marker, the amount of bar code read before the first leading edge of the sender pulse occurs is proportional to a distance (or fraction of the track length) which needs to be deducted from the track length when determining the relationship between the sender pulse count and distance travelled. The same thing happens at the finishing marker, except that an amount of bar code read between the last full sender pulse and the finishing marker can be used to determine the required fraction of track length to be deducted from the total track length. Both fractions of track length would be deducted from the total track length to give a distance travelled which is then equated with the integral pulse count to give a calibration factor. (It may be more convenient to measure the distance travelled by the vehicle after passing the finishing marker and up to the point at which the next leading pulse edge occurs from the sender. In this case, a correcting distance would be added to the total track length and the total pulse count would terminate on the sender pulse that spans the finishing marker.) The on-board microprocessor in a tachograph could be used to calculate and to store a calibration factor for that vehicle.

Alternatively, fractional track distances could be converted into fractional pulses at the starting and finishing markers to proceed as before.

An embodiment of the invention will now be described with reference to the accompanying drawings, in which:
Fig. 1 schematically illustrates a vehicle on track, and a pulse diagram relating to one embodiment of the invention;

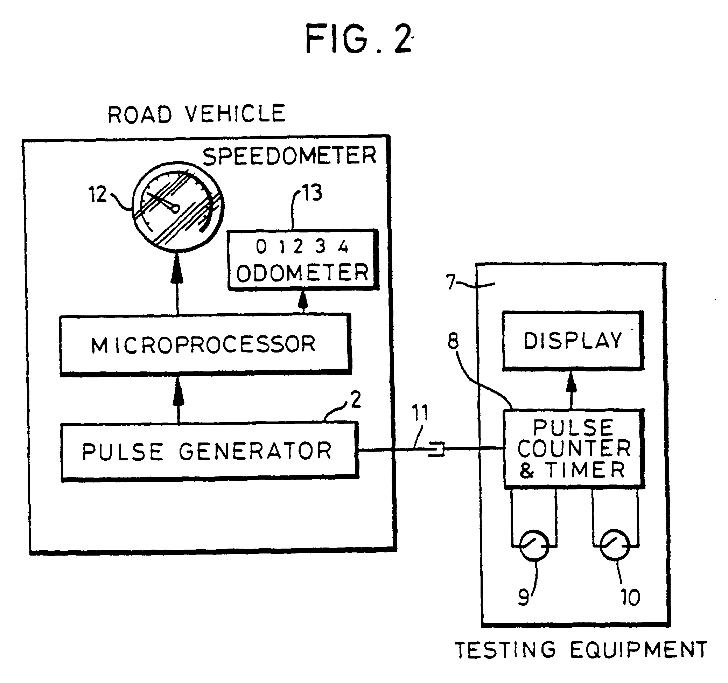

Fig. 2 is a block diagram; and
Figs. 3 and 3A schematically illustrate other embodiments of the invention.

Referring to the drawings, a vehicle 1, having a sender pulse generating device 2 fitted to its gearbox 3, is shown at the start of a track 4, which has an accurately predetermined length (for example, 20 metres). The length of the track may be measured by any suitable accurate measuring means.

A starting marker 5 and a finishing marker 6 marks the start and the end of the measured track length. These markers are shown schematically, because they may, in fact, be some form of switch which is operated when a reference point on the vehicle 1 passes the respective marker 5 or 6. For example, markers 5 and 6 may be V-blocks which are arranged at spaced intervals on the track, the edges of the V's accurately representing the start and finish of the measured portion of the track. An antenna or wand-shaped contact member, temporarily mounted on the vehicle, may be arranged to strike the V's, one after the other, whereby switch contacts are closed causing signals to be generated which mark the start and finish of the "window" in which pulses, from sender pulse generating device 2, are counted. If the switch is fitted to the vehicle, this avoids the need for any trailing leads, since measurements can be made on board.

Other forms of switch may be used. For example, an alternative mechanical switch may be a pressure strip (or mat) which is compressed by the vehicle tyre and thereby operates switch contacts. Alternatively, optical arrangements may be employed where, for example, a reference part of the vehicle intercepts a beam of radiation, at the marker, thereby causing a pulse to be generated. Alternatively, the marker may be a mirror for reflecting a beam of radiation, projected from the vehicle, whereby the reflected beam is detected by a photocell in order to provide a pulse signal. The nature of the switch is not important, as long as it provides an accurate indication of the entry of the vehicle onto the track (at the starting marker), and the exit of the vehicle (at the finishing marker).

The signal processing means 7 which is used to count the integral number of pulses and to determine the fractions of a pulse length at the starting and finishing markers, may be incorporated in the microprocessor, or it may be external to the tachograph. In either case, a microprocessor may be used to control the signal processing so that the time intervals, which represent fractions of a pulse length at the starting and finishing markers, are determined and so that these intervals are combined with the integral number of pulses effectively to add both fractions to the pulse count and thus accurately determine how many pulses and what fraction of a pulse is generated when the vehicle travels, over the track, between the starting and finishing markers.

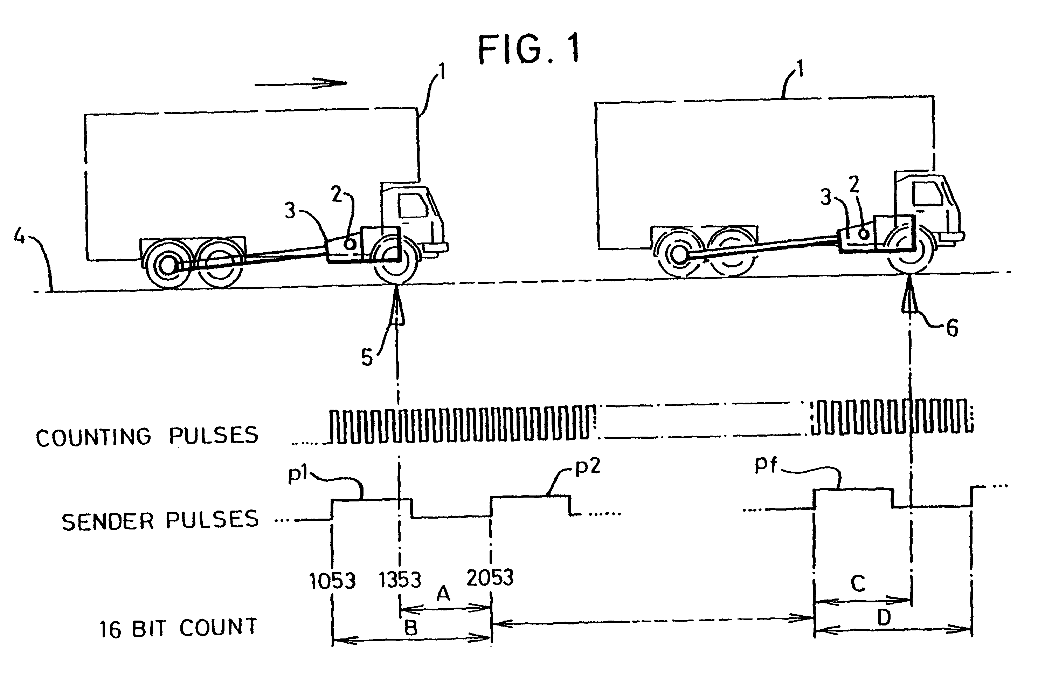

The vehicle is preferably caused to travel over the measured length of the track at constant speed. Broadly speaking, the pulses generated by the sender pulse generator are counted within the window between the starting and finishing pulses. Referring to Fig. 1, this shows a typical pulse diagram where a sender pulse p1 was started before the vehicle reached the starting marker, whereby only a fraction of the pulse occurs subsequently. Similarly, the last pulse pf started just prior to reaching the finishing marker is incomplete as the vehicle passes this marker. In the example shown, square sender pulses are generated. The start of the sender pulse is a rising edge and the end of the pulse occurs coincidentally with the rising edge of the next sender pulse. With a sender pulse length B, only a fraction A of the pulse occurs after the vehicle passes the starting marker. At the end of the track, the sender pulse length D is the same as B (when the vehicle speed is constant over the track), but the fraction C of the last pulse occurs before the finishing marker. The times represented by A and C can be accurately measured. This can be achieved by generating pulses at a much faster rate than the sender pulses and by counting the number of fast or clock pulses which have been generated over intervals of interest. For example, the clock pulse count is stored on the occurrence of every rising edge of the sender pulse.

In the example shown (in which the clock pulses are shown only schematically) the pulse count is 1053 on the rising edge which occurs just before the vehicle passes the starting marker 5. The clock pulse count (1353) is also stored when the vehicle passes the starting marker. This can be triggered by the switch which operates when an antenna, on the vehicle, strikes the V-block. The next clock pulse count to be stored (2053) is when the next rising edge of the sender pulse occurs. Thus, the pulse length at the starting marker is 2053 - 1053 = 1000. The fraction of the pulse A which occurs after the starting marker and before the rising edge of the next sender pulse (P2) is 2053 - 1353 = 700. Hence the ratio A/B is simply 700/1000 or 7/10 of a sender pulse length. A similar procedure is adopted at the finishing marker and this will be understood without any further detailed explanation.

The number of full sender pulses occurring between the starting and finishing markers can be deduced from the number of pulse counts which represent the occurrence of rising edges after the vehicle has passed the starting marker and just before it passes the finishing marker. Thus, the time for one pulse length (B or D) is accurately known. Therefore, the ratios A/B and C/D represent the fractions of the pulses occurring at the start and the finish of the measured track. These are added to the integral number of pulses, which are counted over the measured track length, to give a nonintegral value of pulses generated over the measured track length. In the case of a 20 metre track, this figure could be multiplied by, for example, 50, to give the number of pulses per kilometre.

A suitable fast or clock pulse may be generated by a oscillator which, by way of example only, produces a pulse every 10 microseconds. This can be part of the circuitry in the on-board microprocessor in a tachograph. The microprocessor can also cooperate with a counter (e.g. a 16 bit counter) which is incremented by each clock pulse, the clock pulse count being stored for every leading (or trailing) edge. Preferably, the microprocessor on the vehicle calculates a calibration factor which it then store for use with that vehicle when subsequently converting the sender pulse rate into a speed indication and indexing an odometer which measures the distance covered by the vehicle.

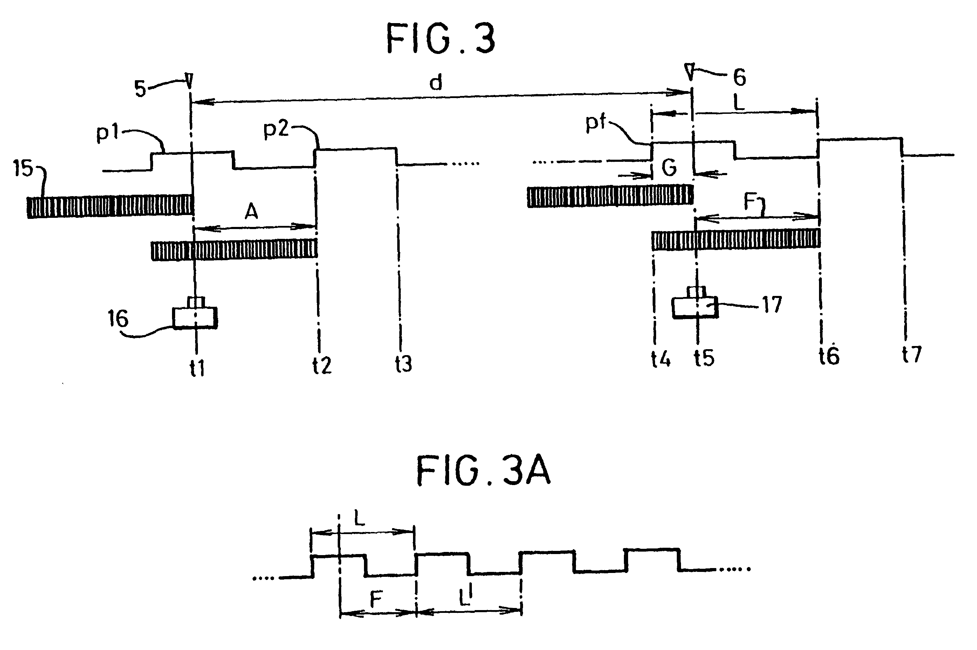

In the embodiment shown in Fig. 3, a bar code 15 is attached to the vehicle. There is only one bar code, but two are shown at the starting marker and two at the finishing marker to illustrate the positions of the bar code a times t1, t2 and t4, t5. A bar code reader 16 has its reading aperture aligned with starting marker 5, and another bar code reader 17 has its reading aperture aligned with the finishing marker 6. The leading edge of each sender pulse indexes a counter so as to count the number of full sender pulses which occur in the interval t5-t1, i.e. over the measured distance. In the previous embodiment, the fractions of sender pulses which occurred in the intervals t2-t1, immediately after the marker 5, and t5-t4, immediately before the finishing marker 6 were added to this integral pulse count. However, in this embodiment, it is only necessary to measure the equivalent distances or fractions of track length.

Three possible ways of determining these fractions will now be described (but these are not to be taken as exclusive, since other approaches may be adopted by those skilled in the art without departing from the broad concept of the invention).
(1) At the starting marker 5, circuitry (not shown), connected to the reader 16, is triggered by the leading edge of the bar coded strip 15 at time t1. It is triggered again by the leading edge of the first integral pulse p2 (after the leading edge of the strip 15 has passed the starting marker). As the length of the bar coded strip is accurately known, together with the relationship between position of the code and the length of the strip 15, the distance A can be deduced. For example, the amount of bar code read in the interval t1-t2 corresponds to a digital number and this represents the corresponding distance A measured along the length of the strip. This length A can is then deducted from the known distance d between the starting and finishing markers (since the leading edge of the first integral pulse p2 starts at t2, after the vehicle has travelled the distance A). In a similar fashion, the circuitry (not shown), connected to the reader 17, is triggered by the leading edge of the bar coded strip 15 at time t5 and then again by the leading edge of the first integral pulse (after the strip 15 has passed the finishing marker). This enables the distance G to be calculated which is also deducted from distance d. As the number N of integral pulses between the starting and finishing markers can be counted, it follows that d - (A+G) is the distance corresponding to the integral number of pulses N. Therefore, a calibration factor can be determined.
   The distance F could be determined instead of G. In this case the bar code has overshot the finishing marker by the distance F and this would need to be added to the track distance (i.e. d - A + F is the distance covered during the pulse count (which includes an extra pulse)
   Whilst a commonly known bar code may be used, the term "bar code" may cover any kind of code having a position and length relationship.
(2) The length L' of the first integral pulse could be measured after passing the finishing marker and this could be related to a distance from which G or F is subtracted to determine an appropriate fraction of the track. This is shown in Fig. 3A.
(3) In this alternative, the bar coded strip 15 is adapted so that its reference point in at its centre, i.e. so that this triggers the reader when the strip is at the marker. In this way the amount of bar code following (or preceding) the central reference point can be measured and deducted from the measured track length as before.

In the example illustrated by Fig. 3, the first leading edge of a full pulse occurs after the starting marker and the last leading edge of a full pulse occurs before the finishing marker. Thus, both fractional track lengths need to deducted from the known track length before equating distance with the integral pulse count. It is also feasible for the fractional track lengths to be determined ahead of the starting marker and after the finishing marker, whereby both fractional track lengths are added to the known track length to determine a distance to be equated with an integral pulse count. In the latter cases, fractions of full or integral pulses extend beyond the markers and the pulse count is respectively different.

It may be more convenient to place bar codes at the markers and to attach a bar code reader to the vehicle. This has the advantage of requiring only one reader and also feeding bar code information, from the reader, directly into circuitry on-board the vehicle for processing by the tachograph microprocessor.

A bar code is not essential, because other codes or grids of lines, or sequences of dots could provide similar information.

Advantages of at least the preferred embodiments of the invention are that a vehicle tester need only drive the vehicle over a short test track. The technique is accurate and it is also sufficient to calibrate a rolling road. The arrangement is applicable to all types of speed/distance senders which have an electronic output, including those which do not work at very low speeds. An onboard microprocessor can easily determine and store a calibration factor for the vehicle. This could also be easily changed or updated for the same vehicle (or a different vehicle if fitted with a replacement tachograph) to take account of e.g. gear box ratio, or tyre size, or axle ratio.

## Claims

1. A method of calibrating a speed or distance measuring device for a vehicle (1) which is fitted with a sender pulse generator (2) for generating pulses (p) related to the distance travelled by the vehicle, said sender pulses (p) having a frequency related to the speed of, or distance travelled by the vehicle (1), the method comprising the steps of:
providing a track (4) having a predetermined length between starting and finishing markers (5, 6); and
causing the vehicle (1) to travel between the starting and finishing markers (5, 6) and counting the number of full sender pulses (p) produced by the sender pulse generator (2);
**characterised in that** the method comprises the steps of:
determining any fraction (A) of a pulse lengthy (B) which occurs between the starting marker (5) and the first full sender pulse (p₁) and;
determining any fraction (C) of a pulse length (D) which occurs between the last full sender pulse (p_{f}) and the finishing marker (6); and
determining the number of full sender pulses (p) and fractions of sender pulses (A, C) occurring when the vehicle (1) travels between said markers (5, 6), and
using the information so determined, with the known track length, to determine a calibration factor for the speed/distance measuring device on the vehicle (1).

2. A method according to claim 1, wherein each fractional pulse length (A, C) is determined by counting pulses, generated at a faster rate than the sender pulse frequency.

3. A method according to claim 1 or 2, wherein a fraction A of a sender pulse length is measured between the starting marker (5) and the first rising edge, and a fraction C of a sender pulse length is measured between the last full sender pulse and the finishing marker (6), and the ratios A/B and C/D are determined, where B and D represent the full sender pulse lengths at the starting and finishing markers (5, 6) respectively; the ratios representing the corresponding fractions of sender pulses which are added to the sender pulse count.

4. A method of calibrating a speed or distance measuring device for a vehicle (1) which is fitted with a sender pulse generator (3) for generating sender pulses (p) relating to the distance travelled by the vehicle, said pulses (p) having a frequency related to the speed of or distance travelled by the vehicle (1), the method comprising the steps of:
providing a track (4) having a predetermined length between starting and finishing markers (5, 6); and
causing the vehicle (1) to travel between the starting and finishing markers (5, 6) and counting the number of full sender pulses produced by the pulse generator (3);
**characterised in that** the method comprises the steps of:
determining any positive or negative fraction of the track length which occurs between the respective marker and an adjacent sender pulse edge;
using said fraction of track length, the number of full sender pulses and the predetermined track length to determine a calibration factor for the speed/distance measuring device on the vehicle (1).

5. A method according to claim 4, wherein corresponding fractions (A, C) of sender pulses (p) are determined from said fractions of track length, said fractions (A, C) of sender pulses being combined with the count of full sender pulses to provide a value that is equated with the known track length between the markers (5, 6).

6. A method according to claim 4, wherein said fractional track lengths are added to, or subtracted from the known track length to determine the actual distance corresponding to the count of the full sender pulses between said markers (5, 6).

7. A method according to claim 5 or 6, wherein an amount of a bar code (15) read between the marker (5, 6) and the adjacent edge or edges of a sender pulse (p) is used to determine the fraction of the track length or of the sender pulse.

8. A method according to any preceding claim, wherein the duration of the vehicle (1) on the track, between the marker (5, 6), is signalled by causing a switch or switches to operate when a reference point on the vehicle (1) passes the relevant marker (5, 6).

9. A method according to claim 8, wherein the switch is mounted on the vehicle (1) and is operated as the switch passes the respective marker (5, 6).

10. A method according to claim 8 or 9, wherein respective switches are mounted at the marker (5, 6) and are operated as the vehicle (1) passes the respective marker.

11. A method according to any of claims 8-10, wherein the switch is a mechanical switch, including an antenna or wand shaped member, which strikes the edge of a V-block in passing.

12. A method according to any of claims 8-10, wherein the switch is operated by pressure when one of the vehicle tyres passes over it.

13. A method according to any of claims 8-10, wherein the switch is an optical switch on the vehicle (1) which is operated when a part of the vehicle (1) is detected at the marker (5, 6).

14. A method according to any of the preceding claims, when used to calibrate the speed measuring device, for a specific vehicle (1), to take account of its gearbox (3) ratio, or rear axle ratio, or tyre size, or any combination thereof.

15. A method according to any of the preceding claims, wherein the speed measuring device is, or is incorporated in, a tachograph which indicates vehicle speed and records distance travelled by the vehicle (1).

16. A method according to claim 15, wherein the tachograph comprises an odometer (13), means for providing a setting to calibrate the odometer, and a microprocessor programmed so that the calibration setting enables the odometer (13) to respond to the setting so that it can be incremented accurately for the distance travelled by the vehicle (1).

17. A method according to claim 16, wherein the microprocessor is also programmed to respond to the sender pulse frequency so as to provide an output signal which is supplied, to an electronic display, for indicating vehicle speed.

18. A method according to claim 1, wherein a microprocessor is programmed so that it counts said number of full sender pulses in a "window" between switch signals representing the positions of the starting and finishing markers (5, 6), and so that it times the interval between the switch starting pulse and the first rising edge of a pulse from the speed/distance sender, as well as the interval between the last pulse from the sender and the finishing marker (6).

## Patentansprüche

1. Verfahren zum Eichen bzw. Kalibrieren einer Geschwindigkeits- oder Distanzmeßvorrichtung für ein Fahrzeug (1), welches mit einem Senderimpulsgenerator (2) zum Erzeugen von Impulsen (p) angepaßt ist, welche auf die Distanz, welche durch das Fahrzeug zurückgelegt wird, bezogen sind, wobei die Senderimpulse (p) eine Frequenz aufweisen, welche auf die Geschwindigkeit vom Fahrzeug oder die Distanz, welche durch das Fahrzeug (1) zurückgelegt wurde, bezogen ist, wobei das Verfahren die Schritte aufweist:
Vorsehen einer Spur (4), welche eine vorbestimmte Länge zwischen Start- und Endmarkierungen (5, 6) aufweist; und
Bewirken, daß sich das Fahrzeug (1) zwischen den Start- und Endmarkierungen (5, 6) bewegt und Zählen der Anzahl von vollen Senderimpulsen (p), welche durch den Senderimpulsgenerator (2) erzeugt werden;
**dadurch gekennzeichnet, daß** das Verfahren die Schritte aufweist;
Bestimmen eines bzw. jedes Bruchteils (A) von einer Impulslänge (B), welche zwischen der Startmarkierung (5) und dem ersten vollen Senderimpuls (p₁) auftritt bzw. stattfindet und;
Bestimmen eines bzw. jedes Bruchteils (C) einer Impulslänge (D), welche zwischen dem letzten vollen Senderimpuls (pf) und der Endmarkierung (6) auftritt; und
Bestimmen der Anzahl von vollen Senderimpulsen (p) und Bruchteilen der Senderimpulse (A,C), welche auftreten, wenn das Fahrzeug (1) sich zwischen den Markierungen (5, 6) bewegt, und
Nutzen der so bestimmten Information, mit der bekannten Spurlänge, um einen Kalibrierungsfaktor für die Geschwindigkeits/Distanz Meßvorrichtung an dem Fahrzeug (1) festzulegen.

2. Verfahren nach Anspruch 1, worin jede Teillmpulslänge (A, C) durch Zählen von Impulsen bestimmt ist, welche bei einer schnelleren Rate bzw. Geschwindigkeit erzeugt werden als die Senderimpulsfrequenz.

3. Verfahren nach Anspruch 1 oder 2, worin ein Bruchteil A einer Senderimpulslänge zwischen der Startmarkierung (5) und der ersten ansteigenden Kante gemessen wird, und ein Bruchteil C einer Senderimpulslänge zwischen dem letzten vollen Senderimpuls und der Endmarkierung (6) gemessen wird, und die Verhältnisse A/B und C/D bestimmt werden, wobei B und D die vollen Senderimpulslängen an den Start- bzw. Endmarkierungen (5, 6) darstellen; die Verhältnisse stellen die entsprechenden Bruchtelle der Senderimpulse dar, welche zu der Senderimpulszahl addiert werden.

4. Verfahren zum Eichen bzw. Kalibrieren einer Geschwindigkeits- oder Distanzmeßvorrichtung für ein Fahrzeug (1), welches mit einem Senderimpulsgenerator (3) zum Erzeugen von Impulsen (p) angepaßt ist, welche auf die Distanz, welche durch das Fahrzeug zurückgelegt wird, bezogen sind, wobei die Impulse (p) eine Frequenz aufweisen, welche auf die Geschwindigkeit vom Fahrzeug oder die Distanz, welche durch das Fahrzeug (1) zurückgelegt wurde, bezogen ist, wobei das Verfahren die Schritte aufweist:
Vorsehen einer Spur (4), welche eine vorbestimmte Länge zwischen Start- und Endmarkierungen (5, 6) aufweist; und
Bewirken, daß sich das Fahrzeug (1) zwischen den Start- und Endmarkierungen (5, 6) bewegt und Zählen der Anzahl von vollen Senderimpulsen (p), welche durch den Senderimpulsgenerator (3) erzeugt werden;
**dadurch gekennzeichnet, daß** das Verfahren die Schritte aufweist:
Bestimmen eines positiven oder negativen Bruchteils der Spurlänge, weicher zwischen der entsprechenden Markierung und einer benachbarten Senderimpulskante auftritt;
Nutzen des Bruchteils der Spurlänge, der Anzahl von vollen Senderimpulsen und der vorbestimmten Spurlänge um einen Kalibrierungsfaktor für die Geschwindigkeits/Distanzmeßvorrichtung an dem Fahrzeug (1) zu bestimmen.

5. Verfahren nach Anspruch 4, worin entsprechende Bruchteile (A, C) von Senderimpulsen (p) von den Bruchtellen der Spurtlänge bestimmt werden, wobei die Bruchteile (A, C) von Senderimpulsen mit der Zahl von vollen Senderimpulsen kombiniert werden, um einen Wert vorzusehen, welcher gleichgesetzt wird mit der bekannten Spurlänge zwischen den Markierungen (5, 6).

6. Verfahren nach Anspruch 4, worin die Bruchteilspurlängen zu der bekannten Spurlänge addiert oder von der bekannten Spurlänge subtrahiert werden, um die aktuelle Distanz entsprechend der Zahl von vollen Senderimpulsen zwischen den Markierungen (5, 6) zu bestimmen.

7. Verfahren nach Anspruch 5 oder 6, worin eine Menge bzw. Summe eines Strichcodes (15), welcher zwischen der Markierung (5, 6) und der benachbarten Kante oder Kanten eines Senderimpulses (p) gelesen wird, benutzt wird, um den Bruchteil der Spurlänge oder des Senderimpulses zu bestimmen.

8. Verfahren nach einem der vorhergehenden Ansprüche, worin die Dauer des Fahrzeugs (1) auf der Spur zwischen den Markierungen (5, 6) durch Bewirken eines Schalters oder von Schaltern zu betätigen bzw. operieren, signalisiert wird, wenn ein Referenzpunkt an dem Fahrzeug (1) die relevante Markierung (5, 6) passiert.

9. Verfahren nach Anspruch 8, worin der Schalter an dem Fahrzeug (1) montiert Ist und betätigt wird, wenn der Schalter die entsprechende Markierung (5, 6) passiert.

10. Verfahren nach Anspruch 8 oder 9, worin entsprechende Schalter an den Markierungen (5, 6) montiert sind und betätigt werden, wenn das Fahrzeug (1) die entsprechende Markierung passiert.

11. Verfahren nach einem der Ansprüche 8 bis 10, worin der Schalter ein mechanischer Schalter ist, beinhaltend eine Antenne oder ein ruten- bzw, stabförmiges Glied, welches die Kante eines V-Blocks beim Passieren anschlägt.

12. Verfahren nach einem der Ansprüche 8 bis 10, worin der Schalter durch Druck betätigt wird, wenn einer der Fahrzeugreifen über ihn fährt.

13. Verfahren nach einem der Ansprüche 8 bis 10, worin der Schalter ein optischer Schalter an dem Fahrzeug (1) ist, welcher betätigt wird, wenn ein Teil des Fahrzeugs (1) an der Markierung (5, 6) detektiert bzw. erfaßt wird.

14. Verfahren nach einem der vorhergehenden Ansprüche, genutzt, um die Geschwindigkeitsmeßvorrichtung, für ein spezifisches Fahrzeug (1) zu kalibrieren, wobei sein Getriebe (3) -Verhältnis bzw. -Untersetzung, oder Hinterachsverhältnis, oder Reifengräße, oder jede Kombination davon in Betracht gezogen wird.

15. Verfahren nach einem der vorhergehenden Ansprüche, worin die Geschwindigkeitsmeßvorrichtung ein Tacho ist oder in diesen inkorporiert ist, welcher die Fahrzeuggeschwindigkeit anzeigt und die durch das Fahrzeug (1) zurückgelegte Distanz aufnimmt.

16. Verfahren nach Anspruch 15, worin der Tacho einen Odometer bzw. Wegstreckenzähler (13) umfaßt, Mittel zum Vorsehen einer Einstellung zum Kalibrieren des Entfernungsmessers, und ein Mikroprozessor, der so programmiert ist, daß die Kalibrierungseinstellung den Wegstreckenzähler (13) aktiviert, der Einstellung zu antworten, so daß er genau Inkrementiert werden kann für die Entfernung, welche durch das Fahrzeug (1) zurückgelegt wird.

17. Verfahren nach Anspruch 16, worin der Mikroprozessor auch programmiert ist, der Senderimpulsfrequenz zu antworten, um so ein Ausgabesignal vorzusehen, welches einem elektronischen Display bzw. einer elektronischen Anzeige, zum Anzeigen der Fahrzeuggeschwindigkeit zugeführt wird.

18. Verfahren nach Anspruch 1, worin ein Mikroprozessor so programmiert ist, daß er die Zahl von vollen Senderimpulsen in einem "Fenster" zwischen den Schaltersignalen zählt, welche die Positionen der Start und Endmarkierungen (5, 6) repräsentieren, und so daß er zeitlich das Intervall zwischen dem Schalterstartimpuls und der ersten ansteigenden Kante eines Impulses von dem Geschwindigkeits/Distanzsender, wie auch das Intervall zwischen dem letzten Impuls von dem Sender und der Endmarkierung (6) festlegt bzw. steuert.

## Revendications

1. Procédé de calibrage d'un dispositif de mesure de vitesse ou de distance d'un véhicule (1) qui est muni d'un générateur d'impulsions d'émetteur (2) pour produire des impulsions (p) concernant la distance parcourue par le véhicule, lesdites impulsions d'émetteur (p) ayant une fréquence fonction de la vitesse du véhicule (1) ou de la distance parcourue par celui-ci, le procédé comportant les étapes consistant à :
fournir une piste (4) ayant une longueur prédéterminée entre des repères de début et de fin (5, 6), et
amener le véhicule (1) à se déplacer entre les repères de début et de fin (5, 6) et compter le nombre d'impulsions d'émetteur complètes (p) produites par le générateur d'impulsions d'émetteur (2),
**caractérisé en ce que** le procédé comporte les étapes consistant à :
déterminer toute fraction (A) d'une longueur d'impulsion (B) qui survient entre le repéra de début (5) et la première impulsion d'émetteur complète (p₁), et
déterminer toute fraction (C) d'une longueur d'impulsion (D), qui survient entre la dernière impulsion d'émetteur complète (P_{f}) et le repère de fin (6), et
déterminer le nombre d'impulsions d'émetteur complètes (p) et de fractions d'impulsions d'émetteur (A, C) survenant lorsque le véhicule (1) se déplace entre lesdits repères (5, 6), et
utiliser les informations ainsi déterminées, avec la longueur de piste connue, pour déterminer un facteur de calibrage pour le dispositif de mesure de vitesse/distance situé sur le véhicule (1).

2. Procédé selon la revendication 1, dans lequel chaque longueur d'impulsion fractionnelle (A, C) est déterminée en décomptant des impulsions, produites à une cadence plus rapide que la fréquence d'impulsion d'émetteur.

3. Procédé selon la revendication 1 ou 2, dans lequel une fraction A d'une longueur d'impulsion d'émetteur est mesurée entre le repère de début (5) et le premier bord montant, et une fraction C d'une longueur d'impulsion d'émetteur est mesurée entre la dernière impulsion d'émetteur complète et le repère de fin (6), et les rapports A/B et C/D sont déterminés, où B et D représentent les longueurs d'impulsion d'émetteur complètes au niveau des repères de début et de fin (5, 6) respectivement, les rapports représentant les fractions correspondantes d'impulsion d'émetteur qui sont ajoutées au décompte d'impulsions d'émetteur.

4. Procédé de calibrage d'un dispositif de mesure de vitesse ou de distance d'un véhicule (1) qui est muni d'un générateur d'impulsions d'émetteur (3) pour créer des impulsions d'émetteur (p) relatives à la distance parcourue par le véhicule, lesdites impulsions (p) ayant une fréquence fonction de la vitesse du véhicule (1) ou de la distance parcourue par celui-ci, le procédé comportant les étapes consistant à :
fournir une piste (4) ayant une longueur prédéterminée entre des repères de début et de fin (5, 6), et
amener le véhicule (1) à se déplacer entre les repères de début et de fin (5, 6) et compter le nombre d'impulsions d'émetteur complètes produit par le générateur d'impulsions (3),
**caractérisé en ce que** le procédé comporte les étapes consistant à :
déterminer toute fraction positive ou négative de la longueur de piste qui survient entre les repères respectifs et un bord d'impulsion d'émetteur adjacent,
utiliser ladite fraction de longueur de piste, le nombre d'impulsions d'émetteur complètes et la longueur de piste prédéterminée pour déterminer un facteur de calibrage pour le dispositif de mesure de vitesse/distance situé sur le véhicule (1).

5. Procédé selon la revendication 4, dans lequel des fractions correspondantes (A, C) d'impulsions d'émetteur (p) sont déterminées à partir desdites fractions de longueur de piste, lesdites fractions (A, C) d'impulsions d'émetteur étant combinées avec le décompte d'impulsions d'émetteur complètes pour fournir une valeur qui est égale à la longueur de piste connue entre les repères (5, 6).

6. Procédé selon la revendication 4, dans lequel lesdites longueurs de piste fractionnelle sont ajoutées à la longueur de piste ou soustraites à celle-ci pour déterminer la distance réelle correspondant au décompte d'impulsions d'émetteur complètes entre lesdits repères (5, 6).

7. Procédé selon la revendication 5 ou 6, dans lequel une valeur d'un code à barres (15) lue entre le repère (5, 6) et le bord adjacent ou les bords adjacents d'une impulsion d'émetteur (p) est utilisée pour déterminer la fraction de longueur de piste ou d'impulsion d'émetteur.

8. Procédé selon l'une quelconque des revendications précédentes, dans lequel le temps de séjour du véhicule (1) sur la piste, entre les repères (5, 6), est signalé en amenant un commutateur ou des commutateurs à agir lorsqu'un point de référence situé sur le véhicule (1) passe devant le repère concerné (5, 6).

9. Procédé selon la revendication 8, dans lequel le commutateur est monté sur le véhicule (1) et est actionné lorsque le commutateur passe devant le repère respectif (5, 6).

10. Procédé selon la revendication 8 ou 9, dans lequel des commutateurs respectifs sont montés au niveau des repères (5, 6) et sont actionnés lorsque le véhicule (1) passe devant le repère respectif.

11. Procédé selon l'une quelconque des revendications 8 à 10, dans lequel le commutateur est un commutateur mécanique, incluant une antenne ou un élément en forme de baguette, qui vient frapper le bord d'un bloc en V lors d'un passage.

12. Procédé selon l'une quelconque des revendications 8 à 10, dans lequel le commutateur est actionné par une pression lorsque l'un des pneumatiques du véhicule passe sur celui-ci.

13. Procédé selon l'une quelconque des revendications 8 à 10, dans lequel le commutateur est un commutateur optique situé sur le véhicule (1), qui est actionné lorsqu'une partie du véhicule (1) est détectée au niveau du repère (5, 6).

14. Procédé selon l'une quelconque des revendications précédentes, lorsqu'on l'utilise pour calibrer le dispositif de mesure de vitesse, pour un véhicule spécifique (1), pour prendre en compte son rapport de boîte de vitesse (3), ou son rapport d'essieu arrière, ou sa dimension de pneumatique, ou toute combinaison de ceux-ci.

15. Procédé selon l'une quelconque des revendications précédentes, dans lequel le dispositif de mesure de vitesse est un tachygraphe, ou est incorporé dans celui-ci, qui indique la vitesse du véhicule et enregistre la distance parcourue par le véhicule (1).

16. Procédé selon la revendication 15, dans lequel le tachygraphe comporte un compteur kilométrique (13), des moyens pour fournir un réglage pour calibrer le compteur kilométrique, et un microprocesseur programmé de telle sorte que le réglage du calibrage permet au compteur kilométrique (13) de répondre au réglage de telle sorte qu'il peut être incrémenté de manière précise pour la distance parcourue par le véhicule (1).

17. Procédé selon la revendication 16, dans lequel le microprocesseur est aussi programmé pour répondre à la fréquence d'impulsion d'émetteur de manière à fournir un signal de sortie qui est envoyé, vers un affichage électronique, pour indiquer la vitesse du véhicule.

18. Procédé selon la revendication 1, dans lequel un microprocesseur est programmé de telle sorte qu'il compte ledit nombre d'impulsions d'émetteur complètes dans une "fenêtre" située entre des signaux de commutateur représentant les positions des repères de début et de fin (5, 6), et de telle sorte qu'il minute l'intervalle entre l'impulsion de début de commutateur et le premier bord montant d'une impulsion provenant de l'émetteur de vitesse/distance, ainsi que l'intervalle entre la dernière impulsion provenant de l'émetteur et le repère de fin (6).
